# EUROPÄISCHE PATENTSCHRIFT

(11) **EP 2 933 456 B1**
(45) Veröffentlichungstag und Bekanntmachung des Hinweises auf die Patenterteilung: **23.11.2016**
(21) Anmeldenummer: 15000382.0
(22) Anmeldetag: 10.02.2015
(51) Int. Cl.: F01N 11/00

(54) **Reduktionsmitteldosiersystem mit Leckageüberwachung**
Reductant dosing system with leak detection
Système de dosage d'agent de réduction doté d'une surveillance de fuite

(30) Priorität: 15.04.2014 DE 102014005522
(43) Veröffentlichungstag der Anmeldung: 21.10.2015
(73) Patentinhaber: Albonair GmbH, 44263 Dortmund (DE)
(72) Erfinder: Kohut, Thomas, 44807 Bochum (DE)
(74) Vertreter: Patentanwaltskanzlei Methling

(56) Entgegenhaltungen:
- EP-A1- 2 722 504
- DE-A1-102006 051 926
- DE-A1-102010 040 365

## Beschreibung

Die Erfindung betrifft ein Reduktionsmitteldosiersystem zur Einspritzung eines Reduktionsmittels in den Abgasstrom eines Verbrennungsmotors zur selektiven katalytischen Reduktion, mit einer Förderpumpe, mittels derer Reduktionsmittel aus einem Reduktionsmitteltank über eine Förderleitung gefördert und über zumindest eine Düse in den Abgasstrom des Verbrennungsmotors eingeleitet wird.

Ferner betrifft die Erfindung ein Verfahren zum Betrieb eines Reduktionsmitteldosiersystems zur Einspritzung eines Reduktionsmittels in den Abgasstrom eines Verbrennungsmotors zur selektiven katalytischen Reduktion, mit einer Förderpumpe, mittels derer Reduktionsmittel aus einem Reduktionsmitteltank über eine Förderleitung gefördert und über zumindest eine Düse in den Abgasstrom des Verbrennungsmotors eingeleitet wird.

Katalysatoren zur selektiven katalytischen Reduktion, sogenannte SCR-Katalysatoren (englisch selective catalyic reduction, abgekürzt: SCR) werden eingesetzt, um die Stickoxydemission von Dieselmotoren, Feuerungsanlagen, Müllverbrennungsanlagen, Industrieanlagen und dergleichen zu vermindern. Hierzu wird ein Reduktionsmittel in das Abgassystem mit einer Dosiervorrichtung eingedüst. Als Reduktionsmittel dient Ammoniak oder eine Ammoniaklösung oder ein anderes Reduktionsmittel.

Aus der DE 10 2006 051 926 A1 ist eine Leitung zur Zuführung von Reduktionsmittel zu einem Abgasstrom einer Verbrennungskraftmaschine bekannt, mit einer ersten umfänglich geschlossenen Wand, wobei die Leitung eine zweite umfänglich geschlossene Wand sowie Sensorelektroden umfasst und wobei die zweite Wand die erste Wand umgibt sowie ein Zwischenraum zwischen der ersten und der zweiten Wand vorgesehen ist und wobei die Sensorelektroden zumindest teilweise in dem Zwischenraum angeordnet sind.

Aus der DE 10 2010 040 365 A1 ist eine Vorrichtung zum Eindosieren eines Reduktionsmittels in einen Abgasstrom einer Verbrennungskraftmaschine mit einem Dosiermodul bekannt, wobei das Reduktionsmittel entweder mit einem ersten Teilstrom eines Trägermediums transportiert wird und ein zweiter Teilstrom des Trägermediums getrennt von dem ersten Teilstrom transportiert wird, oder das Reduktionsmittel ohne Trägermedium bis zu einer Eindosierstelle geführt wird und dort mit dem getrennt zugeführten Zerstäubermedium mit dem getrennt zugeführten Trägermedium zusammengeführt wird.

Da das Mitführen von Ammoniak in Fahrzeugen sicherheitskritisch ist, wird Harnstoff in wässriger Lösung mit üblicherweise 32,5 % Harnstoffanteil insbesondere gemäß DIN 70070 eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im wesentlichen Zeit (Verdampfungs- und Reaktionszeit), Temperatur und Tröpfchengröße der eingedüsten Harnstofflösung. In diesen SCR-Katalysatoren wird durch selektive katalytische Reduktion (englisch selective catalyic reduction, SCR) der Ausstoß von Stickoxyden um etwa 90 % reduziert.

Bei den bekannten Reduktionsmitteldosiersystemen zur Einspritzung eines Reduktionsmittels in den Abgasstrom eines Verbrennungsmotors zur selektiven katalytischen Reduktion wird die Reduktionsmittellösung mittels einer Membran- oder Kolbenpumpe zur Düse gefördert. Dabei wird die Überwachung des Dosiersystems durch Auswertung des Messsignals eines NOx-Sensors, der im Abgasstrang hinter dem Katalysator angeordnet ist, realisiert. Nachteilig dabei ist es, dass dieses Signal nicht genau genug ist, um eine Leckage in der Reduktionsmittelförderleitung zu erkennen. Eine Überwachung der Dosierung über einen gewissen Zeitraum mittels eines Vergleiches zwischen geförderter Dosiermenge und der Änderung des Tankfüllstandes ist mit ausreichender Genauigkeit realisierbar, jedoch würde diese Vorgehensweise nicht sicherstellen können, das tatsächlich die gesamte geförderte Dosiermenge auch in den Abgasstrang eingeleitet wurde und nicht etwa eine Leckage in der Förderleitung vorliegt.

Die Aufgabe der Erfindung ist es, ein Reduktionsmitteldosiersystem der eingangs genannten Art derart weiter zu bilden, dass eine Leckage in der Reduktionsmittelförderleitung sicher erkannt werden kann.

Eine weitere Aufgabe der Erfindung ist es, ein Verfahren zum Betrieb eines Reduktionsmitteldosiersystems anzugeben, welches die Überwachung der Dosierung und das Erkennen einer Leckage in der Reduktionsmittelförderleitung ermöglicht.

Diese Aufgabe wird erfindungsgemäß durch ein Reduktionsmitteldosiersystem gemäß Anspruch 1 und durch ein Verfahren zum Betrieb eines Reduktionsmitteldosiersystems gemäß Anspruch 13 gelöst. Vorteilhafte Weiterbildungen der Erfindung sind in den jeweiligen abhängigen Ansprüchen angegeben.

Besonders vorteilhaft bei dem Reduktionsmitteldosiersystem zur Einspritzung eines Reduktionsmittels in den Abgasstrom eines Verbrennungsmotors zur selektiven katalytischen Reduktion, mit einer Förderpumpe, mittels derer Reduktionsmittel aus einem Reduktionsmitteltank über eine Förderleitung gefördert und über zumindest eine Düse in den Abgasstrom des Verbrennungsmotors eingeleitet wird, ist es, dass die Förderleitung durch einen Schlauch gebildet ist, der außenseitig einen den Schlauch mantelförmig umschließenden elektrischen Leiter aufweist, wobei das Reduktionsmitteldosiersystem eine Überwachungseinheit aufweist, mittels derer die elektrische Leitfähigkeit zwischen dem Reduktionsmittel in dem Schlauch und dem elektrischen Leiter überwacht wird.

Insbesondere kann das Reduktionsmitteldosiersystem eine die Förderpumpe enthaltende Pumpeneinheit aufweisen. Diese Pumpeneinheit kann zusätzlich zu der Förderpumpe weitere Bauteile, insbesondere Schaltventile und/oder Sensoren aufweisen. Im Folgenden wird der Begriff des Schlauches synonym mit dem Begriff der Leitung bzw. Förderleitung verwendet.

Mit dem Begriff der Förderleitung kann dabei sowohl die Saugleitung zwischen dem Tank und der Förderpumpe als auch die Druckleitung zwischen von der Förderpumpe zur Düse bezeichnet sein, d.h. dass die Saugleitung zwischen dem Tank und der Förderpumpe und/oder die Druckleitung von der Förderpumpe zur Düse durch einen Schlauch gebildet sein kann, der außenseitig einen den Schlauch mantelförmig umschließenden elektrischen Leiter aufweist.

Besonders vorteilhaft bei dem Verfahren zum Betrieb eines Reduktionsmitteldosiersystems zur Einspritzung eines Reduktionsmittels in den Abgasstrom eines Verbrennungsmotors zur selektiven katalytischen Reduktion mit einer Förderpumpe, mittels derer Reduktionsmittel aus einem Reduktionsmitteltank über eine Förderleitung gefördert und über zumindest eine Düse in den Abgasstrom des Verbrennungsmotors eingeleitet wird, ist es, dass die Förderleitung durch einen Schlauch gebildet ist, der außenseitig einen den Schlauch mantelförmig umschließenden elektrischen Leiter aufweist, wobei das Reduktionsmitteldosiersystem eine Überwachungseinheit aufweist, mittels derer die elektrische Leitfähigkeit zwischen dem Reduktionsmittel in dem Schlauch und dem elektrischen Leiter überwacht wird.

Die Begriffe Reduktionsmitteldosiersystem bzw. Dosiersystem werden im Sinne der Erfindung synonym verwendet. Mit dem Begriff der Reduktionsmittellösung oder des Reduktionsmittels ist jedes zur selektiven katalytischen Reduktion geeignete Reduktionsmittel umfasst, vorzugsweise kommt hierzu eine Harnstofflösung gemäß DIN 70070 zum Einsatz. Die Erfindung ist jedoch nicht hierauf beschränkt.

Bei der Dosierpumpe kann es sich insbesondere um eine Membranpumpe oder eine Kolbenpumpe oder eine Kreiselpumpe oder eine Orbitalpumpe oder eine Zahnradpumpe handeln. Vorzugsweise ist die Förderpumpe druckbegrenzt und/oder es kann zwischen der Förderpumpe und der Dosierkammer ein Druckbegrenzer in die Förderleitung integriert sein.

In einer bevorzugten Gesamtanordnung weist das Reduktionsmitteldosiersystem einen Tank auf, in den die Reduktionsmittellösung eingefüllt wird und aus dem die Reduktionsmittellösung entnommen und mittels der Förderpumpe gefördert und über zumindest eine Düse in den Abgasstrom des Verbrennungsmotors eingeleitet wird.

Erfindungsgemäß erfolgt somit eine Überwachung der elektrischen Leitfähigkeit zwischen der elektrisch leitfähigen in dem Schlauch geförderten Flüssigkeit und dem den Schlauch flächig umschließenden außenseitig auf dem Schlauch angeordneten elektrischen Leiter. Der mantelförmige Leiter umschließt den Schlauch somit flächig und ist nicht etwa nur linienförmig ausgebildet. Im Falle einer Undichtigkeit, beispielsweise durch einen äußeren Einfluss, der zu einem Loch oder Riss in dem Schlauch führt, kommt es zu einem Kurzschluss zwischen der geförderten Flüssigkeit und dem außenseitig am Schlauch angeordneten elektrischen Leiter. Da der Leiter den Schlauch mantelförmig, d.h. auf der gesamten Oberfläche des Schlauches flächig umschließt, wird der Leiter unabhängig von der zufälligen Positionierung einer Beschädigung des Schlauches von der geförderten Reduktionsmittellösung benetzt, sodass es zu einem Kurzschluss, d.h. zu einer elektrisch leitenden Verbindung der geförderten Flüssigkeit mit dem äußeren elektrischen Leiter kommt. Durch eine permanente Überwachung der elektrischen Leitfähigkeit, d.h. durch die Detektion eines schlagartigen Abfalls des elektrischen Widerstands zwischen der geförderten Flüssigkeit und dem äußeren elektrischen Leiter kann eine Undichtigkeit des Schlauches zuverlässig detektiert werden. Wird eine solche Undichtigkeit des Schlauches detektiert, kann diese auf eine Anzeigeeinheit durch eine entsprechende Anzeige gemeldet und/oder in einen Fehlerspeicher des Dosiersystems auslesbar geschrieben und abgespeichert werden. Der außenseitig den Schlauch umschließenden Leiter weist einen Anschlussbereich zur Kontaktierung des elektrischen Leiters mit der Überwachungseinheit auf.

Bei der üblicherweise als Reduktionsmittellösung eingesetzten Harnstofflösung insbesondere gemäß DIN 70070 handelt es sich um eine elektrisch leitende Flüssigkeit. Zur permanenten Überwachung der elektrischen Leitfähigkeit zwischen der geförderten Flüssigkeit und dem äußeren den Schlauch flächig umschließenden elektrischen Leiter ist eine metallische Stelle des Dosiersystems, die von der Reduktionsmittellösung während des Dosierbetriebes benetzt wird, vor oder hinter dem Schlauch mit Masse verbunden. Solange der Schlauch unbeschädigt ist und keine Leckage auftritt, wirkt der Schlauch als Isolator zwischen der geförderten Flüssigkeit und dem äußeren elektrischen Leiter.

Besonders vorteilhaft ist, dass der äußere elektrische Leiter den Schlauch flächig umschließt, d.h. die Oberfläche des Schlauches abdeckt, sodass auch kleinste Leckagen unabhängig von deren Positionierung auf der Oberfläche des Schlauches sofort zu einer elektrisch leitenden Verbindung mit dem äußeren elektrischen Leiter führen und die Leckage detektiert wird.

Vorzugsweise ist der Leiter durch ein elektrisch leitendes Drahtgeflecht und/oder eine elektrisch leitende Folie gebildet. Durch eine derartige Ausgestaltung des außenseitig am Schlauch angeordneten den Schlauch flächig umschließenden Leiters ist gewährleistet, dass die gesamte Oberfläche des Schlauches von dem Leiter überdeckt wird und hierdurch jede Leckage unmittelbar detektiert werden kann.

In einer bevorzugten Ausführungsform weist der Leiter außenseitig eine Schutzschicht und/oder eine Isolationsschicht gegen die Umgebung auf. Durch eine derartige Schutzschicht wird der Leiter gegen die Umgebung geschützt und elektrisch isoliert. Hierdurch wird die Zuverlässigkeit der Leckageüberwachung gewährleistet.

Der Schlauch kann somit sandwichartig ausgestaltet sein. Zur Innenseite hin ist der Schlauch durch den Reduktionsmittel führenden inneren Schlauch gebildet, der außenseitig ein elektrisch leitendes Drahtgeflecht und/oder eine elektrisch leitende Folie aufweist, welche wiederum nach außen von einer Schutzschicht und/oder einer Isolationsschicht gegen die Umgebung geschützt und elektrisch isoliert ist. Solange der Schlauch keine Undichtigkeit aufweist, bildet somit der Reduktionsmittel führende innere Schlauch einen elektrischen Isolator zwischen dem geförderten Reduktionsmittel und dem Drahtgeflecht und/oder der Folie. Drahtgeflecht und/oder Folie wiederum sind nach außen gegenüber der Umgebung durch eine Schutzschicht geschützt und ebenfalls gegenüber der Umgebung elektrisch isoliert.

Alternativ kann der Leiter, insbesondere ein Drahtgeflecht und/oder eine Folie, in die Materialmatrix des Schlauches eingebettet sein. Insbesondere kann hierdurch die für die Leckageüberwachung benötigte Anordnung eines den Schlauch flächig umschließenden elektrischen Leiters auf besonders vorteilhafte Weise in das Material des Schlauches eingebettet sein. Der Schlauch weist dann einen entsprechenden Anschlussbereich zur Kontaktierung des elektrischen Leiters mit der Überwachungseinheit auf.

Erfindungsgemäß weist das System eine Druckluftversorgung auf und das Reduktionsmittel wird innerhalb oder außerhalb der Düse mittels Druckluft zerstäubt. Dabei kann die Druckluftversorgung ein Schaltventil und/oder ein Druckregelventil aufweisen. Dieses Schaltventil dient der Steuerung, d. h. der Ein- und Abschaltung der Druckluftversorgung für das gesamte oder einen Teil des Dosiersystems.

Alternativ oder kumulativ kann die Druckluftversorgung ein Druckregelventil aufweisen. Hierdurch kann die Druckluft auf ein zur Zerstäubung des Reduktionsmittels mittels Druckluft gewünschtes Druckniveau eingestellt werden. Die Druckluft selbst kann aus einem bordeigenen Druckluftsystem, beispielsweise eines Nutzfahrzeuges, in dessen Abgastrakt das Dosiersystem angeordnet ist, entnommen werden, ohne dass der in dem Druckluftsystem vorherrschende Systemdruck eine Einschränkung darstellt, da der Druck der Druckluft auf den gewünschten Druck abgesenkt werden kann.

In einer erfindungsgemäßen Ausführungsform des Reduktionsmitteldosiersystems ist demnach eine Druckluftversorgung vorgesehen, wobei das Reduktionsmittel innerhalb oder außerhalb der Düse mittels Druckluft zerstäubt wird. Zur Zerstäubung des Reduktionsmittels kann eine Mischkammer vorgesehen sein, innerhalb derer eine Zerstäubung des Reduktionsmittels mittels der Druckluft bereits vor der Einleitung in den Abgastrakt erfolgt. In einer bevorzugten Ausführungsform ist jedoch die Düse als außenmischende Zweistoffdüse ausgebildet, bei der aus einer ersten Düsenöffnung die Reduktionsmittellösung austritt und aus einer zweiten Düsenöffnung Druckluft austritt, wobei die beiden Düsenöffnungen derart zueinander ausgerichtet sind, dass die Druckluft das Reduktionsmittel außerhalb der Düse zerstäubt, so dass die Düse als außenmischende Zweistoffdüse ausgebildet ist und die Aerosolbildung außerhalb der Düse erfolgt.

Erfindungsgemäß ist der Schlauch von einem Außenschlauch ummantelt, wobei durch den Außenschlauch Druckluft zur Düse gefördert wird, die zur Zerstäubung des Reduktionsmittels dient.

Die Förderleitung kann somit auch durch einen doppelwandigen Schlauch mit einem Innenschlauch innerhalb eines Außenschlauches gebildet sein, wobei das Reduktionsmittel durch den Innenschlauch gefördert wird. Ein flexibler doppelwandiger Schlauch bietet dabei insbesondere den Vorteil, dass dieser flexibel und biegsam ist, und dadurch geeignet ist, Vibrationen, wie sie bei Fahrzeugen, Nutzfahrzeugen und dergleichen typischerweise auftreten, auszugleichen, ohne dass es zu einem Abriss der Förderleitung kommt. Dabei wird durch den Außenschlauch Druckluft zur Düse gefördert, die zur Zerstäubung des Reduktionsmittels dient.

Vorzugsweise weist der Schlauch oder Innenschlauch bei einer doppelwandigen Ausführung und/oder die Pumpeneinheit einen Temperatursensor und/oder einen Drucksensor auf. Bei einer doppelwandigen Ausführung der Förderleitung als ein die Reduktionsmittelösung fördernder Schlauch mit einem den Schlauch ummantelnden Außenschlauch kann alternativ oder kumulativ der Außenschlauch einen Temperatursensor und/oder einen Drucksensor aufweisen.

Derartige Sensoranordnungen am Innenschlauch und/oder am Außenschlauch und/oder in der Pumpeneinheit können auch durch kombinierte Temperatur- und Drucksensoren gebildet sein. Mittels derartiger Sensoren können der Druck und/oder die Temperatur in dem Innenschlauch und/oder im Außenschlauch und/oder in der Pumpeneinheit erfasst und somit überwacht werden.

Vorzugsweise weist das System eine Beheizungseinrichtung zur Beheizung der Reduktionsmittellösung auf. Die vielfach eingesetzte Reduktionsmittellösung gemäß DIN 70070 gefriert aufgrund ihres Wassergehaltes bei ca. -11°C. Daher ist es erforderlich, eine Beheizungseinrichtung zur Beheizung der Reduktionsmittellösung für den Fall sehr niedriger Umgebungstemperaturen vorzusehen.

In einer besonders bevorzugten Ausführungsform weist das System eine Beheizungseinrichtung zur Beheizung von Luft, insbesondere Druckluft, zur Einleitung in einen den Schlauch ummantelnden Außenschlauch auf. Hierdurch kann eine Anordnung geschaffen werden, bei der mittels des im Außenschlauch befindlichen aufgeheizten Fluides eine Beheizung der im Innenschlauch geförderten Reduktionsmittellösung erfolgt, so dass ein Einfrieren der Reduktionsmittellösung zwischen Förderpumpe und Düse zuverlässig verhindert wird.

Vorzugsweise ist der das Reduktionsmittel fördernde Schlauch über einen Stutzen an die Düse angeschlossen. Besonders bevorzugt ist ein den Schlauch ummantelnder Druckluft fördernder Außenschlauch über einen äußeren Stutzen an die Düse angeschlossen.

In einer bevorzugten Ausführungsform weist die Düse zwei Anschlussstutzen auf, wobei der Reduktionsmittel führende Schlauch über den ersten Stutzen an die Düse angeschlossen ist und ein Druckluft führender den Schlauch ummantelnder Außenschlauch über den zweiten Stutzen an die Düse angeschlossen ist, wobei es sich bei der Düse um eine außen mischende Zweistoffdüse handelt. Dabei kann die Düse als kompakter Düsenkörper ausgeführt sein. Bei der außen mischenden Zweistoffdüse erfolgt somit die Aerosolbildung außerhalb des Düsenkörpers. Daher sind die Austrittsöffnungen der Düse für die Reduktionsmittellösung einerseits und die Druckluft andererseits derart zueinander positioniert, dass die Druckluft auf den aus der Düse austretenden Reduktionsmittelstrahl gerichtet ist und das Reduktionsmittel zerstäubt, sodass die gewünschte Tröpfchengröße herbeigeführt und das Aerosol außerhalb der Düse gebildet wird. Auf eine der Düse vorgeschaltete Mischkammer kann in diesem Fall verzichtet werden.

Unabhängig von der Ausgestaltung der Förderleitung als einwandiger oder doppelwandiger Schlauch handelt es sich vorzugsweise um eine außen mischende Zerstäuberdüse, d.h., dass die Aerosolbildung außerhalb des Düsenkörpers erfolgt, indem die Reduktionsmittellösung über eine erste Düsenöffnung oder eine erste Gruppe von Düsenöffnungen in den Abgasstrang geleitet wird, wobei Druckluft über eine zweite Düsenöffnung oder eine zweite Gruppe von Düsenöffnungen in den Abgasstrang geleitet wird, wobei die erste Düsenöffnung/erste Gruppe von Düsenöffnungen und die zweite Düsenöffnung/zweite Gruppe von Düsenöffnungen derart zueinander angeordnet sind, dass die Druckluft in einem Winkel relativ zur Strahlrichtung des Reduktionsmittels aus dem Düsenkörper austritt, so dass außerhalb des Düsenkörpers das Reduktionsmittel mittels der Druckluft zerstäubt wird und somit eine Aerosolbildung außerhalb der Düse erfolgt. Dabei kann insbesondere die Luftaustrittsöffnung als konzentrischer Ringspalt um eine zentrale erste Düsenöffnung herum angeordnet sein, wobei durch die zentrale erste Düsenöffnung das Reduktionsmittel austritt. Dieser konzentrische Ringspalt kann auch dergestalt ausgebildet sein, dass eine Gruppe von Düsenöffnungen auf einer Kreislinie oder dergleichen um eine zentrale Austrittsöffnung für das Reduktionsmittel herum angeordnet ist.

Die Anschlussstutzen der Düse, an welche der das Reduktionsmittel fördernde Schlauch und ggf. ein Druckluft führender den Schlauch ummantelnder Außenschlauch angeschlossen werden, können als glatte Stutzen ausgeführt sein, über die die Schlauchenden geschoben werden. Die Anschlussstutzen können jedoch dergestalt ausgeführt sein, dass diese auf ihrem Außenumfang einen oder mehrere umlaufende Hinterschneidungen aufweisen, über die das Schlauchende geschoben wird, um ein Abziehen des Schlauches von dem Stutzen zu erschweren, wie dies bei Schlauchtüllen üblicherweise vorgesehen ist. Diese auf den Stutzen umlaufenden Erhebungen können zur Vorderseite hin abgeschrägt sein, um ein Aufschieben der Schlauchenden auf die Stutzen zu erleichtern. An jedem Stutzen können eine oder mehrere dieser umlaufenden Erhebungen und Hinterschneidungen vorgesehen sein.

Bevorzugt ist der Reduktionsmittel fördernde Schlauch über ein Schaltventil oder Regelventil an eine Druckluftversorgung angeschlossen, um den Schlauch und die Düse nach Beendigung der Dosierung mittels Druckluft von Reduktionsmittel zu befreien.

In dieser bevorzugten Ausführungsform des Reduktionsmitteldosiersystems ist somit eine Druckluftversorgung vorgesehen, wobei der Reduktionsmittel fördernde Schlauch und damit auch die Düse über ein Schaltventil an die Druckluftversorgung angeschlossen sind, um sie nach Beendigung der Dosierung mittels Druckluft von Reduktionsmittel zu befreien.

Hierdurch können der Reduktionsmittel fördernde Schlauch und die Düse und/oder eine Dosierkammer und/oder die Dosierleitung nach Beendigung der Dosierung mittels der Druckluft von der Reduktionsmittellösung befreit werden, um ein Einfrieren oder Auskristallisieren der Reduktionsmittellösung zu verhindern. Hierdurch kann Frostschäden und Verstopfungen effektiv vorgebeugt werden.

Die Druckluft kann somit Alternativ oder kumulativ zur Zerstäubung des Reduktionsmittels im Abgasstrang und zur Reinigung der Reduktionsmittel führenden Leitungen nach Beendigung der Dosierung genutzt werden. Vorzugsweise wird der Druck in dem Schlauch mittels eines Drucksensors erfasst und überwacht. Durch eine derartige Erfassung und Überwachung des Druckes in dem Reduktionsmittel führenden Schlauch kann die korrekte Arbeitsweise der Förderpumpe und die Dosierung kontinuierlich überwacht werden.

Bei dem Verfahren zum Betrieb eines Reduktionsmitteldosiersystems zur Einspritzung eines Reduktionsmittels in den Abgasstrom eines Verbrennungsmotors zur selektiven katalytischen Reduktion wird in einem Ausführungsbeispiel durch ein den Schlauch ummantelnden Außenschlauch Druckluft zur Düse gefördert, mittels derer das Reduktionsmittel innerhalb oder außerhalb der Düse zerstäubt wird, wobei der Druck in dem Außenschlauch mittels eines Drucksensors erfasst und überwacht wird.

Insbesondere kann in Dosierpausen der Druck in dem Reduktionsmittel führenden Schlauch und/oder in dem den Schlauch ummantelnden Außenschlauch mit hinterlegten Abgasgegendruckkennfeldern verglichen werden. Insbesondere kann dabei der gemessene zeitliche Verlauf des Druckes in dem Reduktionsmittel führenden Schlauch und/oder der gemessene zeitliche Verlauf des Druckes in dem Außenschlauch mit hinterlegten Abgasgegendruckkennfeldern verglichen werden

Vorzugsweise wird eine Diagnoseroutine durchgeführt, bei der Luftdruckpulsationen erzeugt werden und der Druck in dem Reduktionsmittel führenden Schlauch erfasst und überwacht wird. Dies kann insbesondere die Erfassung und Auswertung des zeitlichen Verlaufes des Druckes in dem Reduktionsmittel führenden Schlauch mit umfassen.

Besonders bevorzugt werden das Reduktionsmittel und/oder Druckluft bei Umgebungstemperaturen unterhalb des Schmelzpunktes des Reduktionsmittels beheizt.

Bevorzugt wird die Förderleitung und/oder die Dosierkammer und/oder der Reduktionsmittel führende Schlauch nach Beendigung der Dosierung über ein Schaltventil an eine Druckluftversorgung angeschlossen, um sie mittels Druckluft von Reduktionsmittel zu befreien.

Hierdurch können die Förderleitung, d.h. der Reduktionsmittel führende Schlauch und die Düse und/oder die Dosierkammer und/oder die Dosierleitung nach Beendigung der Dosierung mittels der Druckluft von der Reduktionsmittellösung befreit werden, um ein Einfrieren oder Auskristallisieren der Reduktionsmittellösung zu verhindern. Hierdurch kann Frostschäden und Verstopfungen effektiv vorgebeugt werden.

Die Druckluft kann somit alternativ oder kumulativ zur Zerstäubung des Reduktionsmittels im Abgasstrang und zur Reinigung der Reduktionsmittelführenden Leitungen nach Beendigung der Dosierung genutzt werden.

Der innere Teil des Ausführungsbeispiels ist in der Figur dargestellt und wird nachfolgend näher erläutert. Es zeigt:

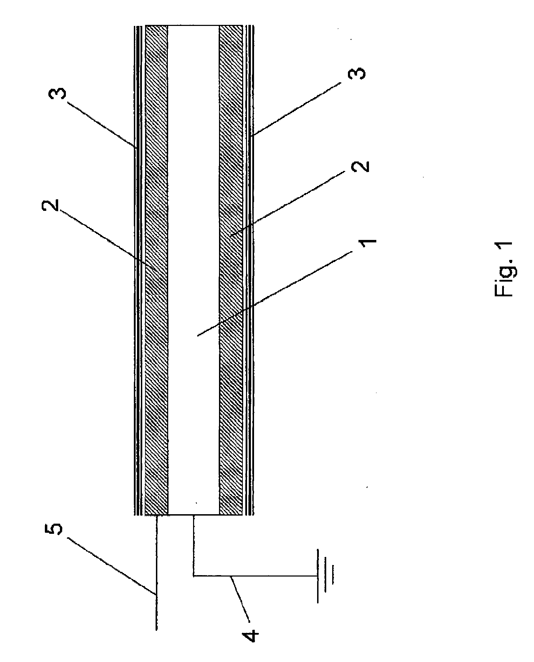

- Fig. 1: Eine Schnittansicht eines Abschnittes der Förderleitung eines Reduktionsmitteldosiersystems.

Fig. 1 zeigt eine Schnittansicht eines Abschnittes der Förderleitung eines Reduktionsmitteldosiersystems. Die Förderleitung ist gebildet durch einen Schlauch 1, welcher während des Dosierbetriebes von dem Reduktionsmittel durchflossen wird. Als Reduktionsmittel wird vorzugsweise Harnstofflösung gemäß DIN 70070 eingesetzt. Alternativ kann jedoch auch jedes andere elektrisch leitfähige Reduktionsmittel eingesetzt werden.

Die Außenwand des Dosierschlauchs 1 weist einen elektrischen Leiter 2 in Form einer Metallschicht aus einem Drahtgeflecht 2 auf. Die Metallschicht in Form des Drahtgeflechtes und/oder Folie 2 ist gegen Umwelteinflüsse von außen durch die Isolierschicht 3 elektrisch isoliert und gegen Umwelteinflüsse geschützt. Die Förderleitung, wie sie in Fig. 1 dargestellt ist, weist dementsprechend ein rotationssymmetrischen Aufbau auf. Das Metallgeflecht 2 umschließt den Schlauch 1 somit flächig und bildet quasi einen elektrisch leitfähigen äußeren Mantel um den Schlauch 1 herum. Gegen äußere Einflüsse geschützt und gleichzeitig elektrisch isoliert ist das Drahtgeflecht 2 durch die Isolierschicht 3. Die in Fig. 1 dargestellte Förderleitung eines Reduktionsmitteldosiersystems ist flexibel und hierdurch biegsam, sodass die Förderleitung der Einbausituation des Reduktionsmitteldosiersystems angepasst werden kann. Die Förderleitung weist dabei rotationssymmetrisch einen sandwichartigen Aufbau mit innerem Schlauch 1, dem Schlauch mantelförmig umgreifenden Drahtgeflecht 2 und äußerer Isolierschicht 3 auf.

Über die Verbindung 4 ist ein mit dem Dosiermittel beaufschlagter elektrisch leitender Bereich im Innenraum des Schlauches 1 mit Masse elektrisch leitend verbunden. An das Metalldrahtgeflecht 2 schließt sich ein Anschluss 5 an, über den das Metalldrahtgeflecht 2 mit einer in der Figur nicht dargestellten Überwachungseinheit des Reduktionsmitteldosiersystems verbunden ist, mittels derer die elektrische Leitfähigkeit zwischen dem Reduktionsmittel im Inneren des Schlauches 1 und dem Drahtgeflecht 2 überwacht wird.

Im Fall einer Leckage des Dosierschlauchs 1 dringt das durch die Beschädigung austretende Medium zu dem Drahtgeflecht 2, welches den Schlauch 1 umschließt, und verursacht eine elektrisch leitende Verbindung zwischen dem Medium in der Dosierleitung 1 und dem Drahtgeflecht 2. Zur Leckagedetektion wird somit die Leitfähigkeit zwischen dem elektrisch leitfähigen Reduktionsmittel in der Dosierleitung 1 und dem Drahtgeflecht 2 gemessen und überwacht. Hierzu ist eine metallische Stelle, die von dem Reduktionsmittel während des Dosierbetriebes benetzt wird, vor oder hinter dem Dosierschlauch 1 über den Kontakt 4 mit Masse verbunden. Solange keine Leckage besteht, wirkt der Dosierschlauch 1 als elektrischer Isolator zwischen dem in dem Dosierschlauch 1 geförderten Reduktionsmittel und dem Drahtgeflecht 2, das heißt eine elektrische Leitfähigkeit aufgrund der Wirkung des Schlauches 1 als elektrischer Isolator besteht nicht.

Dadurch, dass das Drahtgeflecht 2 den Dosierschlauch 1 ummantelt, wird bei Auftreten einer Beschädigung des Schlauches 1 das Drahtgeflecht 2 zwingend mit dem geförderten Reduktionsmittel benetzt, so dass eine elektrisch leitende Verbindung in Form eines Kurzschlusses entsteht, der durch eine entsprechende Überwachungseinheit über den Anschlusskontakt 5 detektiert werden kann. In diesem Fall kann eine entsprechende Warnmeldung erzeugt werden und/oder es besteht die Möglichkeit, einen entsprechenden Vermerk in einen Fehlerspeicher des Dosiersystems zu schreiben und auslesbar abzuspeichern.

In einer nicht dargestellten Ausführungsform der Erfindung ist der in Fig. 1 dargestellte Dosierschlauch von einem weiteren Außenschlauch umgeben, welcher die Anordnung gemäß Fig. 1 vollständig ummantelt und einen Zwischenraum ausbildet. Dabei wird dieser äußere ringförmige Querschnitt genutzt, um Druckluft zu der Einspritzdüse zu transportieren, die der Zerstäubung des einzuspritzenden Reduktionsmittels dient. Hierdurch ergibt sich eine besonders vorteilhafte Anordnung eines Leckageüberwachten Schlauches 1 zum Transport des Dosiermittels, wobei dieselbe Leitung über einen äußeren Ringspalt verfügt, durch den Druckluft zur Zerstäubung des Reduktionsmittels zu der Dosierdüse gefördert wird. Hierdurch ergibt sich insgesamt eine sehr platzsparende und vorteilhafte Anordnung mit integrierter Leckageüberwachung durch Überwachung der elektrischen Leitfähigkeit zwischen dem Drahtgeflecht 2 und dem in dem Schlauch 1 geförderten Reduktionsmittel.

## Patentansprüche

1. Reduktionsmitteldosiersystem zur Einspritzung eines Reduktionsmittels in den Abgasstrom eines Verbrennungsmotors zur selektiven katalytischen Reduktion mit einer Förderpumpe, mittels derer Reduktionsmittel aus einem Reduktionsmitteltank über eine Förderleitung gefördert und über zumindest eine Düse in den Abgasstrom des Verbrennungsmotors eingeleitet wird, wobei die Förderleitung durch einen Schlauch (1) gebildet ist, der außenseitig einen den Schlauch (1) mantelförmig umschließenden elektrischen Leiter (2) aufweist, wobei das Reduktionsmitteldosiersystem eine Überwachungseinheit aufweist, mittels derer die elektrische Leitfähigkeit zwischen dem Reduktionsmittel in dem Schlauch (1) und dem elektrischen Leiter (2) überwacht wird, **dadurch gekennzeichnet, dass** das System eine Druckluftversorgung aufweist und das Reduktionsmittel innerhalb oder außerhalb der Düse mittels Druckluft zerstäubt wird, insbesondere dass die Druckluftversorgung ein Schaltventil und/oder ein Druckregelventil aufweist, und wobei der Schlauch (1) mit dem elektrischen Leiter (2) von einem Außenschlauch ummantelt ist und einen Zwischenraum ausbildet, wobei durch den Außenschlauch Druckluft zur Düse gefördert wird, die zur Zerstäubung des Reduktionsmittels dient.

2. Dosiersystem nach Anspruch 1, **dadurch gekennzeichnet, dass** der Leiter (2) durch ein elektrisch leitendes Drahtgeflecht und/oder eine elektrisch leitende Folie gebildet ist.

3. Dosiersystem nach einem der vorherigen Ansprüche, **dadurch gekennzeichnet, dass** der Leiter (2) außenseitig eine Schutzschicht und/oder eine Isolationsschicht (3) gegen die Umgebung aufweist.

4. Dosiersystem nach einem der vorherigen Ansprüche, **dadurch gekennzeichnet, dass** der Leiter (2), insbesondere ein Drahtgeflecht und/oder eine Folie in die Materialmatrix des Schlauches (1) eingebettet ist.

5. Dosiersystem nach einem der vorherigen Ansprüche, **dadurch gekennzeichnet, dass** das System eine Beheizungseinrichtung zur Beheizung der Reduktionsmütellösung und/oder dass das System eine Beheizungseinrichtung zur Beheizung von Luft, insbesondere Druckluft, zur Einleitung in einen den Schlauch (1) ummantelnden Außenschlauch aufweist.

6. Dosiersystem nach einem der vorherigen Ansprüche, **dadurch gekennzeichnet, dass** der Schlauch (1) über einen Stutzen an die Düse angeschlossen ist.

7. Dosiersystem nach einem der vorherigen Ansprüche, **dadurch gekennzeichnet, dass** ein den Schlauch (1) ummantelnde Druckluft fördernder Außenschlauch über einen äußeren Stutzen an die Düse angeschlossen ist.

8. Dosiersystem nach einem der vorherigen Ansprüche, **dadurch gekennzeichnet, dass** die Düse zwei Anschlussstutzen aufweist, wobei der Reduktionsmittel führende Schlauch (1) über den ersten Stutzen an die Düse angeschlossen ist und ein Druckluft führender den Schlauch ummantelnder Außenschlauch über den zweiten Stutzen an die Düse angeschlossen ist, wobei es sich bei der Düse um eine außen mischende Zweistoffdüse handelt.

9. Dosiersystem nach einem der vorherigen Ansprüche, **dadurch gekennzeichnet, dass** der Schlauch (1) über ein Schaltventil oder Regelventil an eine Druckluftversorgung angeschlossen ist, um den Schlauch und die Düse nach Beendigung der Dosierung mittels Druckluft von Reduktionsmittel zu befreien.

10. Verfahren zum Betrieb eines Reduktionsmitteldosiersystems zur Einspritzung eines Reduktionsmittels in den Abgasstrom eines Verbrennungsmotors zur selektiven katalytischen Reduktion mit einer Förderpumpe, mittels derer Reduktionsmittel aus einem Reduktionsmitteltank über eine Förderleitung gefördert und über zumindest eine Düse in den Abgasstrom des Verbrennungsmotors eingeleitet wird, wobei die Förderleitung durch einen Schlauch (1) gebildet ist, der außenseitig einen den Schlauch (1) mantelförmig umschließenden elektrischen Leiter (2) aufweist, wobei das Reduktionsmitteldosiersystem eine Überwachungseinheit aufweist, mittels derer die elektrische Leitfähigkeit zwischen dem Reduktionsmittel in dem Schlauch (1) und dem elektrischen Leiter (2) überwacht wird, **dadurch gekennzeichnet, dass** durch einen den Schlauch (1) mit dem elektrischen Leiter (2) ummantelnden Außenschlauch, der einen Zwischenraum ausbildet, Druckluft zur Düse gefördert wird, mittels derer das Reduktionsmittel innerhalb oder außerhalb der Düse zerstäubt wird, wobei der Druck in dem Außenschlauch mittels eines Drucksensors erfasst und überwacht wird.

11. Verfahren nach Anspruch 10, **dadurch gekennzeichnet, dass** der Druck in dem Schlauch (1) mittels eines Drucksensors erfasst und überwacht wird.

12. Verfahren nach einem der Ansprüche 10 oder 11, **dadurch gekennzeichnet, dass** in Dosierpausen der Druck in dem Schlauch (1) und/oder der Druck in einem den Schlauch ummantelnden Außenschlauch mit hinterlegten Abgasgegendruckkennfeldern verglichen wird.

## Claims

1. Reducing agent dosing system for injecting a reducing agent into the exhaust gas flow of an internal combustion engine for selective catalytic reduction, having a feed pump, by means of which reducing agent is conveyed from a reducing agent tank via a feed pipe and via at least one nozzle into the exhaust gas flow of the internal combustion engine, wherein the feed line is formed by a hose (1) which on the outside has an electrical conductor (2) that surrounds the hose (1) in the manner of a sheath, wherein the reducing agent dosing system comprises a monitoring unit, by means of which the electrical conductivity between the reducing agent in the hose (1) and the electrical conductor (2) is monitored, **characterised in that**
- the system has a compressed air supply and
- the reducing agent is atomised inside or outside of the nozzle by means of compressed air, in particular **in that** the compressed air supply has a control valve and/or a pressure regulating valve, and wherein the hose (1) with the electrical conductor (2) is sheathed by an outer hose and forms a gap, wherein compressed air is conveyed through the outer hose to the nozzle and is used to atomise the reducing agent.

2. Dosing system according to claim 1, **characterised in that** the conductor (2) is formed by an electrically conductive wire mesh and/or an electrically conductive foil.

3. Dosing system according to either of the preceding claims, **characterised in that** on the outside the conductor (2) has a protective layer and/or an insulating layer (3) against the environment.

4. Dosing system according to any one of the preceding claims, **characterised in that** the conductor (2), in particular a wire mesh and/or a foil, is embedded in the material matrix of the hose (1).

5. Dosing system according to any one of the preceding claims, **characterised in that** the system has a heating device for heating the reducing agent solution and/or **in that** the system has a heating device for heating air, in particular compressed air, for introduction into an outer hose that sheathes the hose (1).

6. Dosing system according to any one of the preceding claims, **characterised in that** the hose (1) is connected to the nozzle by a connecting piece.

7. Dosing system according to any one of the preceding claims, **characterised in that** an outer hose that conveys compressed air and sheathes the hose (1) is connected to the nozzle by an outer connecting piece.

8. Dosing system according to any one of the preceding claims, **characterised in that** the nozzle has two connecting pieces, wherein the hose (1) carrying reducing agent is connected to the nozzle by the first connecting piece and an outer hose that carries compressed air and sheathes the hose is connected to the nozzle by the second connecting piece, wherein the nozzle is a externally-mixing two-component nozzle.

9. Dosing system according to any one of the preceding claims, **characterised in that** the hose (1) is connected by a control valve or regulating valve to a compressed air supply to free the hose and nozzle from reducing agent by means of compressed air at the end of dosing.

10. Method for operating a reducing agent dosing system for injecting a reducing agent into the exhaust gas flow of an internal combustion engine for selective catalytic reduction, having a feed pump, by means of which reducing agent is conveyed from a reducing agent tank via a feed pipe and via at least one nozzle into the exhaust gas flow of the internal combustion engine, wherein the feed line is formed by a hose (1) which on the outside has an electrical conductor (2) that surrounds the hose (1) in the manner of a sheath, wherein the reducing agent dosing system comprises a monitoring unit by means of which the electrical conductivity between the reducing agent in the hose (1) and the electrical conductor (2) is monitored, **characterised in that** compressed air is conveyed to the nozzle by an outer hose that sheathes the hose (1) with the electrical conductor (2), the outer sheath forming a gap, by means of which compressed air the reducing agent is atomised inside or outside of the nozzle, wherein the pressure in the outer hose is detected and monitored by means of a pressure sensor.

11. Method according to claim 10, **characterised in that** the pressure in the hose (1) is detected and monitored by means of a pressure sensor.

12. Method according to either of claims 10 or 11, **characterised in that** in dosing breaks the pressure in the hose (1) and/or the pressure in an outer hose that sheathes the hose is compared with stored exhaust gas counter-pressure characteristic maps.

## Revendications

1. Système de dosage d'agent réducteur pour l'injection d'un agent réducteur dans le flux de gaz d'échappement d'un moteur à combustion en vue de la réduction catalytique sélective, avec une pompe de transport au moyen de laquelle un agent réducteur est transporté d'un réservoir d'agent réducteur par l'intermédiaire d'une conduite de transport et introduit par l'intermédiaire d'au moins une buse dans le flux de gaz d'échappement du moteur à combustion,
la conduite de transport étant formée par un tuyau (1) qui comporte à l'extérieur un conducteur électrique (2) enveloppant le tuyau (1) comme un manteau, le système de dosage d'agent réducteur comportant une unité de surveillance au moyen de laquelle la conductivité électrique entre l'agent réducteur dans le tuyau (1) et le conducteur électrique (2) est surveillée,
**caractérisé en ce que** le système comporte une alimentation en air comprimé et **en ce que** l'agent réducteur est pulvérisé à l'intérieur ou à l'extérieur de la buse au moyen de l'air comprimé, notamment **en ce que** l'alimentation en air comprimé comporte une soupape de commande et/ou une soupape de réglage de pression, le tuyau (1) avec le conducteur électrique (2) étant enveloppé par un tuyau extérieur en formant un espace intermédiaire, de l'air comprimé étant transporté par le tuyau extérieur vers la buse qui sert à pulvériser l'agent réducteur.

2. Système de dosage selon la revendication 1, **caractérisé en ce que** le conducteur (2) est formé par un treillis de fil métallique électriquement conducteur et/ou par une feuille électriquement conductrice.

3. Système de dosage selon l'une des revendications précédentes, **caractérisé en ce que** le conducteur (2) comporte à l'extérieur une couche de protection et/ou une couche d'isolation (3) par rapport à l'environnement.

4. Système de dosage selon l'une des revendications précédentes, **caractérisé en ce que** le conducteur (2), notamment un treillis de fil métallique et/ou une feuille, est noyé dans la matrice de matière du tuyau (1).

5. Système de dosage selon l'une des revendications précédentes, **caractérisé en ce que** le système comporte un dispositif de chauffage pour chauffer la solution d'agent réducteur et/ou **en ce que** le système comporte un dispositif de chauffage pour chauffer de l'air, notamment de l'air comprimé, pour l'introduction dans un tuyau extérieur enveloppant le tuyau (1).

6. Système de dosage selon l'une des revendications précédentes, **caractérisé en ce que** le tuyau (1) est raccordé à la buse par l'intermédiaire d'un manchon.

7. Système de dosage selon l'une des revendications précédentes, **caractérisé en ce qu'**un tuyau extérieur transportant de l'air comprimé enveloppant le tuyau (1) est raccordé à la buse par l'intermédiaire d'un manchon extérieur.

8. Système de dosage selon l'une des revendications précédentes, **caractérisé en ce que** la buse comporte deux manchons de raccordement, le tuyau (1) qui guide l'agent réducteur étant raccordé à la buse par l'intermédiaire du premier manchon et un tuyau extérieur qui enveloppe le tuyau et guide l'air comprimé étant raccordé à la buse par l'intermédiaire du deuxième manchon, la buse étant une buse binaire à mélange extérieur.

9. Système de dosage selon l'une des revendications précédentes, **caractérisé en ce que** le tuyau (1) est raccordé à une alimentation en air comprimé par l'intermédiaire d'une soupape de commande ou d'une soupape de réglage pour libérer le tuyau et la buse de l'agent réducteur au moyen de l'air comprimé après la fin du dosage.

10. Procédé de fonctionnement d'un système de dosage d'agent réducteur pour l'injection d'un agent réducteur dans le flux de gaz d'échappement d'un moteur à combustion en vue de la réduction catalytique sélective avec une pompe de transport au moyen de laquelle un agent réducteur est transporté d'un réservoir d'agent réducteur par l'intermédiaire d'une conduite de transport et introduit par l'intermédiaire d'au moins une buse dans le flux de gaz d'échappement du moteur à combustion,
la conduite de transport étant formée par un tuyau (1) qui comporte à l'extérieur un conducteur électrique (2) enveloppant le tuyau (1) comme un manteau, le système de dosage d'agent réducteur comportant une unité de surveillance au moyen de laquelle la conductivité électrique entre l'agent réducteur dans le tuyau (1) et le conducteur électrique (2) est surveillée,
**caractérisé en ce que**, par un tuyau extérieur enveloppant le tuyau (1) avec le conducteur électrique (2) et formant un espace intermédiaire, de l'air comprimé est transporté vers la buse, air comprimé au moyen duquel l'agent réducteur est pulvérisé à l'intérieur ou à l'extérieur de la buse, la pression dans le tuyau extérieur étant détectée au moyen d'un capteur de pression et surveillée.

11. Procédé selon la revendication 10, **caractérisé en ce que** la pression dans le tuyau (1) est détectée au moyen d'un capteur de pression et surveillée.

12. Procédé selon l'une des revendications 10 ou 11, **caractérisé en ce que**, dans des pauses de dosage, la pression dans le tuyau (1) et/ou la pression dans un tuyau extérieur enveloppant le tuyau est comparée à des courbes enregistrées de caractéristiques de contre-pression de gaz d'échappement.
